# EUROPÄISCHE PATENTSCHRIFT

(11) **EP 0 592 945 B1**
(45) Veröffentlichungstag und Bekanntmachung des Hinweises auf die Patenterteilung: **04.06.1997**
(21) Anmeldenummer: 93116218.4
(22) Anmeldetag: 07.10.1993
(51) Int. Cl.: B29C 45/82

(54) **Hydraulikeinrichtung für eine Spritzgiessmaschine**
Hydraulic system for an injection moulding machine
Dispositif hydraulique pour une machine de moulage par injection

(30) Priorität: 14.10.1992 DE 4234647
(43) Veröffentlichungstag der Anmeldung: 20.04.1994
(73) Patentinhaber: Hehl, Karl, D-72290 Lossburg (DE)
(72) Erfinder: Hehl, Karl, D-72290 Lossburg (DE)
(74) Vertreter: Frank, Gerhard, Dipl.-Phys.

(56) Entgegenhaltungen:
- EP-A- 0 185 984
- DE-C- 3 447 709
- DE-C- 4 018 334

## Beschreibung

Die Erfindung bezieht sich auf eine Hydraulikeinrichtung für hydraulische Verbraucher an einer Spritzgießaschine für die Verarbeitung von Kunststoffen oder vergleichbarer plastischer oder plastifizierbarer Massen nach dem Oberbegriff des Anspruches 1.

Bei einer bekannten Hydraulikeinrichtung nach der DE-C 31 19 095 ist der Energieverbrauch an der Regelpumpe den jeweiligen Leistungserfordernissen einer unteren Grenze angepaßt, indem als Grundlage für den Betrieb und die Steuerung ein am Regelorgan der Regelpumpe voreinstellbares, gerade noch ausreichendes konstantes Betriebsdruckgefälle gewählt wird. Andererseits genügt die bekannte Steuervorrichtung extrem unterschiedlichen Betriebsanforderungen, weil eine vom Sollwert abweichende Mengen- oder Druckeinstellung des Regelventils alternativ mittels Druckfühler, Wegabtaster oder Streckenspannungswandler im Regelkreis auf den Sollwert rückführbar ist. Mit dieser Einrichtung kann jedoch nur die Zustromseite des Verbrauchers beeinflußt werden.

Aus der DE-C 34 47 709 ist eine weitere Hydraulikeinrichtung bekannt, bei der mehrere Versorgungsleitungen mit einer gemeinsamen Steuerrückleitung über ein Wechselventil alternativ in Verbindung stehen. Die Zweigversorgungsleitung geringeren Druckes ist mit einer Regeleinrichtung zur Ausregelung der durch eine Druckasymmetrie bedingten Förderstrom-Sollwertabweichung versehen. Dadurch können mit der Regelpumpe mehrere hydraulische Verbraucher zwar gleichzeitig versorgt werden, jedoch ist ebenfalls nur eine Beeinflussung der Zustromseite der Verbraucher möglich. Nicht nur, daß somit mehrere Regelventile zur Regelung der gesamten Maschine erforderlich sind, so wird auch die Rückstromleitung nicht über dasselbe Regelventil geführt.

Aus der DE-C 40 18 334 ist es bekannt, bei einer Hydraulikeinrichtung für einen Verbraucher ein 4/4-Wegeventil vorzusehen, bei dem eine Differenzschaltung möglich ist, bei der vom Verbraucher verdrängtes Druckmedium über einen mit Rückschlagventil versehenen Zweigkanal in die Druckleitung einspeisbar ist. Der Abfluß des Druckmediums kann zwar mit einer überlagernden Druckregelung erfolgen, jedoch muß ein erheblicher Aufwand getrieben werden, da jedem Verbraucher ein eigenes Regelventil zugeordnet werden muß. Die dadurch ermöglichte komplexe, simultane Regelung mehrerer Verbraucher wird durch einen entsprechenden Kostenaufwand teuer erkauft. Zur Aufrechterhaltung eines konstanten Betriebsdruckgefälles muß den dortigen Regelventilen ein weiteres Regelventil gemäß DE-C 31 19 095 vorgeschaltet werden.

Aus EP-A 0 185 984 ist eine Hydraulikeinrichtung bekannt, bei der eine erste Regeleinheit einer zweiten identischen Regeleinheit vorgeschaltet ist. Durch die erste Regeleinheit kann insofern ein Betriebsdruckgefälle simuliert werden, so daß das Betriebsdruckgefälle zum Regelparameter der zweiten Regeleinheit wird. Dadurch ist eine flexible und schnelle Regelung möglich. Somit sind aber zunächst hierfür schon zwei Regeleinheiten erforderlich, und weder sind sämtliche Verbraucher über ein und dasselbe Regelventil geführt, noch über Zuschaltventile alle Verbraucher hinsichtlich Versorgungs- und Rückstromleitung durch ein einfaches Zuschaltventil mit der Regeleinheit verbunden.

Ausgehend von diesem Stand der Technik liegt der Erfindung die Aufgabe zugrunde, eine Hydraulikeinrichtung der eingangs genannten Gattung derart weiterzubilden, daß eine kostengünstige Regelung oder Steuerung der Verbraucher in zwei Wirkrichtungen über ein Regelventil präzise und energiearm erfolgt.

Diese Aufgabe wird durch eine Einrichtung mit den Merkmalen des Anspruches 1 gelöst.

Diese Lösung bietet den Vorteil, daß die jeweiligen Verbraucher kein Richtungsventil benötigen, sondern über die zentrale Einheit die physikalischen Größen Geschwindigkeit oder Drehzahl, Lage, Druck oder Kraft in zwei Wirkrichtungen gesteuert oder geregelt werden. Die Verbraucher werden lediglich über Zuschaltventile zugeschaltet, so daß sich eine einfache und wartungsfreundliche Steuerung ergibt. Da dennoch sowohl die Zustrom- als auch die Rückstromseite gesteuert oder geregelt werden kann, kann trotz dieser Kostenreduzierung gegenüber dem Stand der Technik eine bessere und komfortablere Regelung erfolgen. Dabei wird bewußt der Nachteil in Kauf genommen, daß durch den Abstand des Regelventils zum Verbraucher größere Widerstände und ein vergrößertes Eigenschwingverhalten auftreten, die die Dynamik einer Regelung reduzieren, da diese Nachteile durch die dabei erlangten Vorteile wieder wettgemacht werden. So sind keine zusätzlichen Schaltmagnete an weiteren Ventilen erforderlich und aufgrund der Einflußmöglichkeit auf Zustrom und Rückstrom kann der Verlust an Regeldynamik teilweise ausgeglichen werden. Die Verringerung der Anzahl weiterer Ventile zwischen Pumpe und Verbraucher führt zudem zu einer Verringerung des Druckverlustes, so daß die Hydraulikeinrichtung dennoch sparsam mit der zur Verfügung stehenden Energie umgehen kann.

Dabei werden die grundsätzlichen Voraussetzungen für eine zentrale Geschwindigkeits-, Druck- und Lageregelung für den hydraulischen Kreislauf der Spritzgießmaschine durch eine übergeordnete elektronische Steuer- oder Regeleinrichtung geschaffen. Das Regelventil arbeitet im Zusammenspiel mit der Regelpumpe wie eine Zuflußstromregelung.

Das vom Verbraucher verdrängte Öl wird auch in Verbindung mit einer Ausbildung nach Anspruch 3 über die jeweilige im Eingriff befindliche Steuerkante im Abfluß gedrosselt. Dadurch können Zylinder oder Hydromotoren kontrolliert beschleunigt und abgebremst werden. Gerade für eine Lage- bzw. Kraftregelung nach dem Prinzip der hydraulischen Vollbrücke ist dieser hydraulische Aufbau notwendig.

Durch den Einsatz mehrerer parallel geschalteter Regelpumpen ist es möglich, einerseits gemäß Anspruch 6 bedarfsweise den Volumenstrom bei einem Regelventil zu erhöhen oder mehrere Steuer- oder Regelkreise nebeneinander vorzusehen, wobei die Pumpleistungen der einzelnen Regelpumpen bedarfsweise überlagert werden können, was zur Energiesparung beiträgt.

Wird nach Anspruch 7 ein Speicher zugeschaltet, können momentan nicht benötigte Volumenströme im Speicher geladen werden und anschließend über einen oder mehrere Steuer- oder Regelkreise entladen werden. Gerade bei mehreren Steuerkreisen macht sich dies in einer energetisch günstigen Betriebsweise bemerkbar. Ergänzend kann auch mittels des Speichers eine hohe Geschwindigkeit geregelt werden.

Eine Ausbildung nach Anspruch 9 ermöglicht eine Mehrgrößenregelung, die aus Kostengründen analog aber auch digital aufgebaut sein kann.

Eine Ausgestaltung nach Anspruch 10 ermöglicht durch die Rückspeisung verdrängten Öles in den Pumpenstrang eine hohe Geschwindigkeit trotz energetisch günstiger Betriebsweise.

Weitere Vorteile ergeben sich aus den Unteransprüchen. Im folgenden wird die Erfindung anhand eines Ausführungsbeispieles erläutert. Es zeigen:
- Fig. 1: Die Hydraulikeinrichtung in schematischer Darstellung,
- Fig. 2: die Hydraulikeinrichtung gemäß Fig. 1 und die Regeleinheit bei Einsatz an einer Kunststoff-Spritzgießmaschine,
- Fig. 3: die Hydraulikeinrichtung mit mehreren Regelpumpen und mehreren Steuerkreisen,
- Fig. 4: eine Hydraulikeinrichtung, der ein Speicher zugeordnet ist,
- Fig. 5: eine Hydraulikeinrichtung mit einem 4/4-Wegeventil.

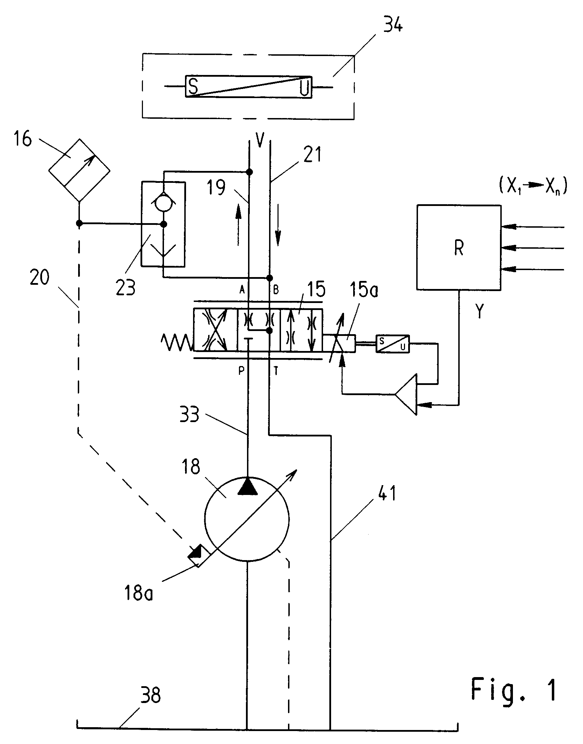

Die Hydraulikeinrichtung ist für hydraulische Verbraucher V bestimmt, die im Ausführungsbeispiel an einer Spritzgießmaschine für die Verarbeitung von Kunststoffen oder vergleichbarer plastischer oder plastifizierbarer Massen, wie z.B. keramischer Massen eingesetzt wird. Sie besitzt gemäß Fig. 1 ein als Regelventil 15 ausgebildetes 4/3-Wegeventil mit drei Schaltstellungen, das zumindest über wenigstens einen Meßwertaufnehmer durch Vergleich von Istwerten mit dem der Regeleinheit R vorgegebenen Sollwerten regelbar ist. Die Regelpumpe 18 speist die Verbraucher V über eine über das Regelventil geführte Versorgungsleitung 19. Dabei kommen als Verbraucher beispielsweise Spritzzylinder, Dosiermotoren, Formschließeinheit, Auswerfer, Kernzüge oder sonstige Aggregate in Betracht.

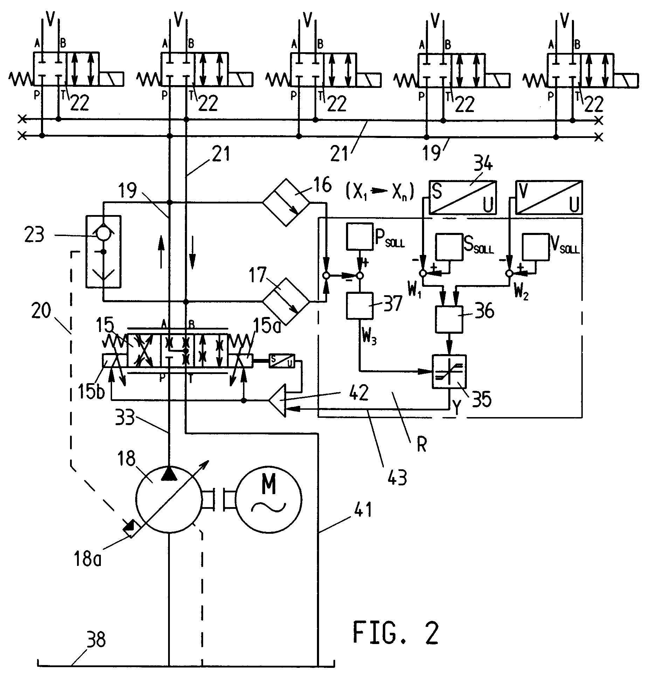

Wie aus Figur 1 ersichtlich, ist auch die Rückstromleitung 21 über das zentral angeordnete Regelventil 15 geführt. Eine zentrale Anordnung des Regelventils 15 ist von Vorteil, wenn die Reibungsverluste auf den Verbraucherleitungen 19 möglichst gering gehalten werden sollen. Das Regelventil steht über dem Verbraucher zugeordnete Zuschaltventile 22 mit den Verbrauchern in Verbindung (Fig. 2). Auch der Rückstromleitung 21 ist ein Meßwertaufnehmer zugeordenet. Dabei kann es sich um zwei Druckfühler 16,17 zur Erfassung des Differenzdruckes, einen Druckfühler zur Erfassung des höchsten Druckes in beiden Leitungen oder einen einzigen oder mehrere Meßwertaufnehmer zur Erfassung von Lage oder Geschwindigkeit handeln. Erfaßt wird somit eine Größe die die Verhältnisse auf beiden Seiten des Verbrauchers wiedergibt, wobei diese Größe für beide Seiten gemeinsam auch durch nur einen Meßwertaufnehmer erfaßt werden kann. Die Meßwertaufnehmer geben somit Istwerte als Eingangsgößen für die Regeleinheit R ab. Grundsätzlich sind als Meßwertaufnehmer Druckfühler, Geschwindigkeitsaufnehmer, Positionserfassungsmittel oder dergleichen vorgesehen. Je nach Stellung des Regelventils wird die Funktion von Versorgungsleitung 19 und Rückstromleitung 21 vertauscht. In Stellung P-A des Regelventils ist die Versorgungsleitung 19 und in Stellung P-B die Rückstromleitung die tatsächliche Versorgungsleitung.

Das vom Verbraucher verdrängte Druckmedium wird über die jeweils im Eingriff befindliche Steuerkante B-T bzw. A-T des Regelventils im Abfluß gedrosselt. Die mittlere Schaltstellung des Regelventils ist als Sperrstellung ausgebildet, die eine Verriegelung beispielsweise in der Nachdruckphase der Spritzgießmaschine erlaubt. Das Regelventil kann direkt gesteuert oder vorgesteuert sein und mit einem oder zwei Regelmagneten 15a,15b ausgestattet sein. Der Einsatz zweier Regelmagnete ist aus Sicherheitsgründen anzustreben. Die Rückführung des Druck-Istwertes zum Regelorgan 18a,18a' der Regelpumpe 18,18' erfolgt über ein Wechselventil 23,23'. Alternativ können z.B. Wegeventile, Steuerabgriffe am Regelventil oder eine externe Druckspeisung vorgesehen sein. Die Rückführung als auch die Regelung der Verstellpumpe erfolgt in Verbindung mit der übergeordneten elektronischen Regeleinheit R. Durch die Rückführung stellt die Regelpumpe 18 einen variablen, aufgeprägten Volumenstrom Q₁ bereit.

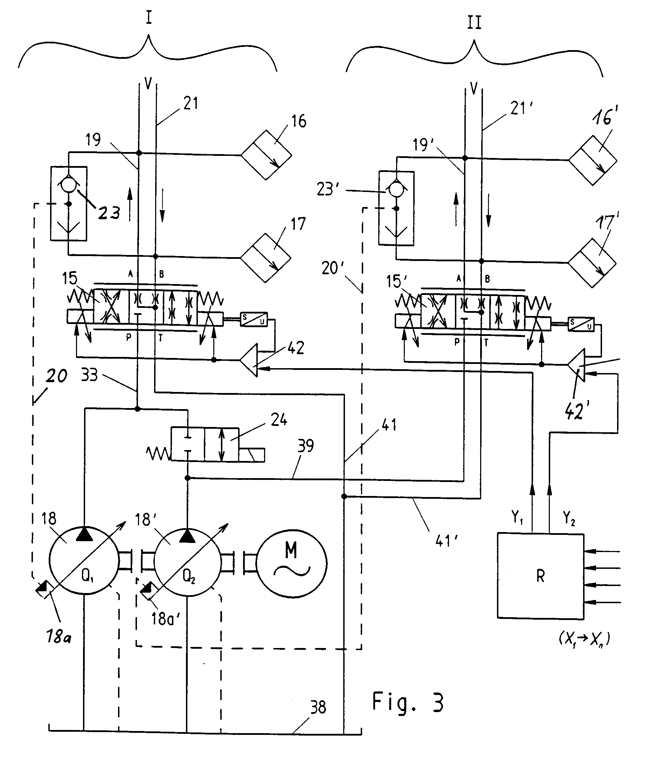

In Figur 3 ist eine Ausgestaltung der Erfindung dargestellt, bei der der Regelpumpe 18 eine weitere Regelpumpe 18' mit einem Volumenstrom Q₂ beigeordnet ist. Grundsätzlich ist die eine Regelpumpe 18 für den Steuer- oder Regelkreis I und die zweite Regelpumpe 18' für den zweiten Steuer- oder Regelkreis II bestimmt. Beide Steuerkreise sind weitgehend identisch aufgebaut, so daß für die Elemente des zweiten Steuerkreises die Bezugszeichen des ersten Steuerkreises unterschieden durch einen Hochstrich verwendet werden. Im Zweiten Steuerkreis wird über die Versorgungsleitung 19' der Verbraucher versorgt und die Rückstromleitung 21' ist über das Regelventil 15' geführt. Die Druckfühler 16',17' sind über das Wechselventil 23' mit der Pumpe 18' über die Steuerrückleitung 20' verbunden. Das rückgeführte Öl gelangt von den Regelventilen 15,15' zum Tank 38. Beide Regelpumpen 18,18' sind über eine Verbindungsleitung 39 miteinander verknüpft, in der ein Zuschaltventil 24 vorgesehen ist. Ganz nach Einsatzwunsch kann der vollständige Volumenstrom Q₂ oder ein Teilvolumenstrom zum Volumenstrom Q₁ der Regelpumpe 18 zugeschaltet werden. Diese Zuschaltung ist jedoch auch in der anderen Wirkrichtung möglich, so daß beide Steuerkreise ganz nach Bedarf mit dem jeweils erforderlichen Volumenstrom versorgt werden können. Über die Leitungen 41,41' erfolgt der Rückstrom vom Regelventil zum Tank 38.

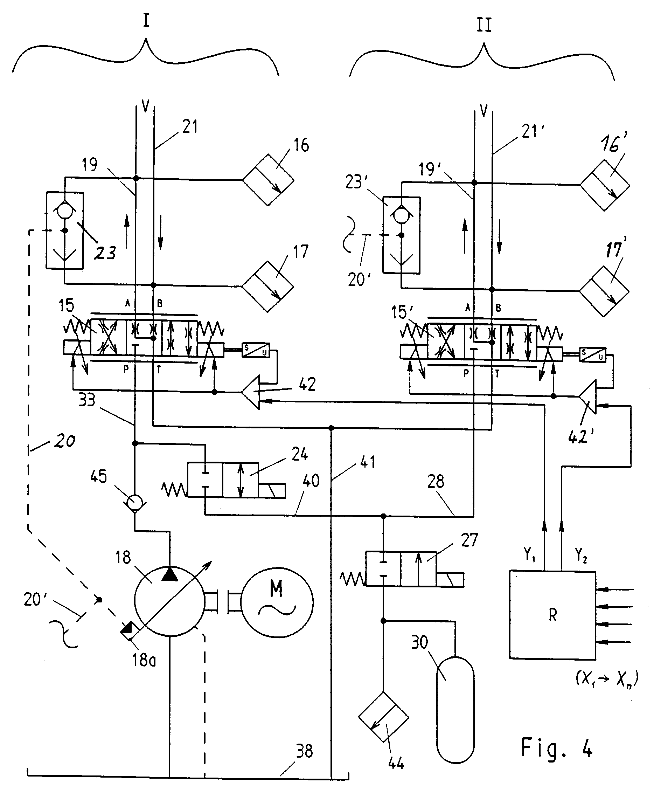

In Figur 4 wird den Steuer- oder Regel kreisen I und II ein Speicher hinzugefügt. Dargestellt ist dabei eine druckstranggeregelte Regelpumpe 18, die den Speicher über die Leitung 40 und das 2/2-Wegeventil 26 versorgt, sofern das Regelventil 15' in seiner mittleren Stellung steht. Zum Aufladen des Speichers ist das 2/2-Wegeventil 27 geöffnet und der Druck wird über den Druckfühler 44 erfaßt. Bei geschlossenem 2/2-Wegeventil 27 ist daher eine Versorgung der Steuerkreise I und II durch die Regelpumpe in bereits beschriebener Weise möglich. Das 2/2-Wegeventil kann z.B. als Cartridge-Ventil ausgebildet sein. Ist der Speicher gespeist, so kann er bedarfsweise über die Leitung 28 oder 40 in jeden der beiden Steuerkreise entladen werden. Dadurch kann beispielsweise eine hohe Geschwindigkeit geregelt werden. Damit kein Rückfluß bei Entladung aus dem Speicher 30 auf die Regelpumpe erfolgt, ist ein Rückschlagventil 45 im Pumpenstrang 33 vorgesehen.

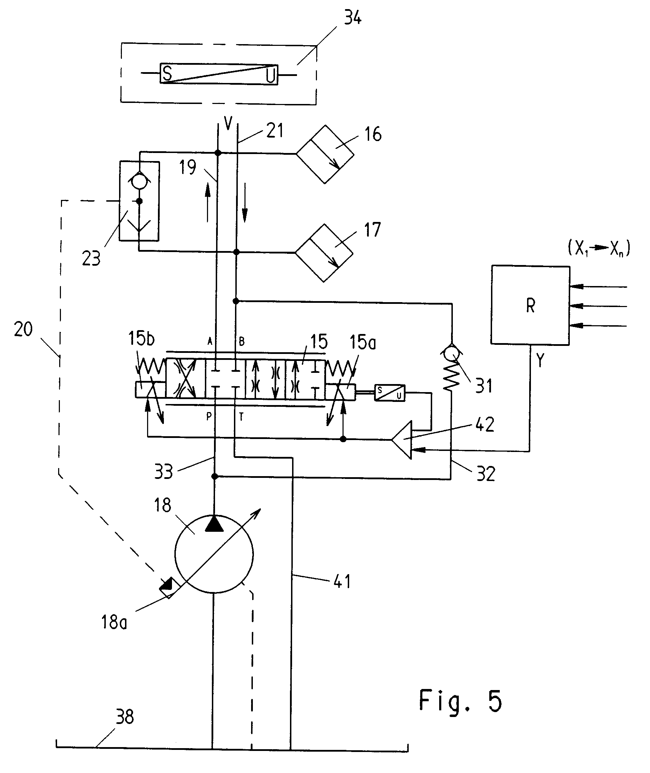

In Figur 5 wird bei sonst weitgehend identischen Aufbau der Hydraulikeinrichtung anstelle des Regelventils 15 ein 4/4-Wegeventil eingesetzt, das über eine 4. Schaltstellung verfügt. In dieser Stellung ist eine Differentialschaltung möglich, in der das vom Verbraucher verdrängte Druckmedium über einen mit Rückschlagventil 31 versehenen, das 4/4-Wegeventil überbrückenden Zweigkanal 32 in den Pumpenstrang 33 einspeisbar ist. Dies ermöglicht um etwa 30 % höhere Geschwindigkeiten bei energetisch günstiger Betriebsweise.

In Fig. 2 ist auch die elektronische Regeleinheit R hinsichtlich ihrer Schaltung genauer dargestellt. Sie arbeitet nach dem Prinzip einer Mehrgrößenregelung, die analog oder digital aufgebaut ist. Für eine Druckregelung sind mindestens ein Druckfühler 16, besser jedoch zwei Druckfühler 16,17 je Regelventil vorgesehen, die die Druck- oder Kraft-Istwerte an den Druckregeler 37 übermitteln, in dem die Führungsgröße w₃ für die Druck- und Kraftregelung bestimmt wird. Im Strecken-Spannungswandler 34 werden die Lage- oder Position-Istwerte x₁ bis xₙ ermittelt, die mit dem Lagesollwert verglichen werden, wobei die Positions-Führungsgröße w₁ bestimmt wird. Die Geschwindigkeit wird mit der Sollgeschwindigkeit vₛₒₗₗ verglichen, wobei die Geschwindigkeits-Führungsgröße w₂ bestimmt wird. Die zugehörigen Istwerte werden an den Verbrauchern durch Meßwertaufnehmer zum Erfassen der Istwerte analog oder digital erfaßt. Die Geschwindigkeits-Führungsgröße w₂ oder die Positions-Führungsgröße w₁ ist übergeordnet und die Führungsgröße w₃ der Druck- und Kraftregelung wirkt im Begrenzer 35 begrenzend hinsichtlich der tatsächlichen Stellgröße y bzw. y₁,y₂. Die Stellgrößen werden dann über die Signalleitung 43 an den Vergleicher 42 übermittelt, der die tatsächliche Stellung des Regelventils mit der Stellgröße vergleicht und ggf. eine Stellbewegung des Regelventils veranlaßt. Die Geschwindigkeit kann im regelungstechnischen Sinne gesteuert oder geregelt werden. Der Regelkreis wird mit der elektronischen Regeleinheit geschlossen. Bei reiner Druck- oder Kraftregelung sind auch umschaltbare Reglernetzwerke denkbar.

## Patentansprüche

1. Hydraulikeinrichtung für hydraulische Verbraucher (V) an einer Spritzgießaschine für die Verarbeitung von Kunststoffen oder vergleichbarer plastischer oder plastifizierbarer Massen mit wenigstens einem Regelventil (15,15') mit wenigstens drei Schaltstellungen, das zumindest über einen einer Versorgungsleitung (19,19' oder 21,21') zugeordneten Meßwertaufnehmer (Druckfühler 16,16') durch Vergleich von Istwerten mit den einer Regeleinheit (R) vorgegebenen Sollwerten regelbar ist, wobei eine Regelpumpe (18,18') die Verbraucher über die über das eine Regelventil geführte Versorgungsleitung speist, und mit einer Steuerrückleitung, die das Regelorgan (18a,18a') der Regelpumpe (18,18') zwecks Einhaltung eines konstanten Betriebsdruckgefälles mit der Versorgungsleitung nach dem Regelventil (15,15') verbindet, sowie mit einer Rückstromleitung für den Rückstrom des Hydraulikmediums vom Verbraucher, dadurch gekennzeichnet, daß auch die Rückstromleitung (21,21' oder 19,19') über dasselbe eine Regelventil (15,15') geführt ist, daß das Regelventil mit jedem Verbraucher über den Verbrauchern (V) zugeordnete, in Versorgungsleitung und Rückführleitung angeordnete Zuschaltventile (22) verbunden ist, und daß auch der Rückstromleitung ein Meßwertaufnehmer (Druckfühler 16,17,17') zugeordnet ist, der in Verbindung mit dem Meßwertaufnehmer (Druckfühler 16,16') der Versorgungsleitung eine Regelgröße für die Regeleinheit (R) bildet.

2. Einrichtung nach Anspruch 1, dadurch gekennzeichnet, daß die Regeleinheit (R) die Istwerte zur Feststellung der Bedingungen auf beiden Seiten der Verbraucher erfaßt.

3. Einrichtung nach Anspruch 1 oder 2, dadurch gekennzeichnet, daß die jeweilige im Eingriff befindliche Steuerkante (B-T bzw. A-T) des Regelventils (15,15') das vom Verbraucher (V) verdrängte Druckmedium im Abfluß drosselt.

4. Einrichtung nach einem der vorhergehenden Ansprüche, dadurch gekennzeichnet, daß die mittlere Schaltstellung des Regelventils (15,15') vorzugsweise als Sperrstellung ausgebildet ist.

5. Einrichtung nach Anspruch 1, dadurch gekennzeichnet, daß die Rückführung des Druck-Istwertes zum Regelorgan der Regelpumpe (18,18') über ein Wechselventil (23,23') oder über Steuerabgriffe am Regelventil erfolgt.

6. Einrichtung nach einem der vorhergehenden Ansprüche, dadurch gekennzeichnet, daß weitere Regelpumpen (18') vorgesehen sind, die über ein Zuschaltventil (24) in der Verbindungsleitung (39) zwischen der ersten und den weiteren Regelpumpen in beiden Wirkrichtungen zuschaltbar sind gemeinsam mit der ersten Regelpumpe (18) mehreren Regel kreisen (I,II) mit mehreren zentralen Regelventilen (15, 15') zugeordnet sind, die von der elektronischen Regeleinheit (R) geregelt sind.

7. Einrichtung nach einem der vorhergehenden Ansprüche, dadurch gekennzeichnet, daß über ein 2/2-Wegeventil (26,27) und die Leitung (40) ein Speicher (30) von der Regelpumpe (18,18') speisbar ist, der über die Leitung (28,40) entladbar ist.

8. Einrichtung nach einem der vorhergehenden Ansprüche, dadurch gekennzeichnet, daß das Regelventil ein 4/4-Wegeventil (29) ist, dessen vierte Schaltstellung eine Differenzschaltung erzeugt, bei der vom Verbraucher (V) verdrängtes Druckmedium über einen mit Rückschlagventil (31) versehenen, das 4/4-Wegeventil überbrückenden Zweigkanal (32) in den Pumpenstrang (33) einspeisbar ist.

9. Einrichtung nach einem der vorhergehenden Ansprüche, dadurch gekennzeichnet, daß an den Verbrauchern Meßwertaufnehmer zum Erfassen der Regelgrößen Position (xₙ) und/oder Geschwindigkeit (v) bzw. Drehzahl vorgesehen sind, die die elektronische Regeleinheit (R) zur Ermittlung der Stellgröße (y;y₁,y₂,y₃) des Regelventils (15,15') im geschlossenen Regelkreis verarbeitet, wobei die Regelgrößen analog und/oder digital erfaßt werden

10. Einrichtung nach Anspruch 9, dadurch gekennzeichnet, daß in der Regeleinheit (R) die Geschwindigkeits-Führungsgröße (w₂) oder die Positions-Führungsgröße (w₁) übergeordnet ist und die Führungsgröße (w₃) der Druck- und Kraftregelung hinsichtlich der tatsächlichen Stellgröße (y) begrenzend wirkt.

## Claims

1. Hydraulic device for hydraulic consumers (V) on an injection moulding machine for processing plastics or comparable plastic or plasticisable masses, with at least one regulating valve (15, 15') with at least two switching positions, which may be regulated at least via a transducing means (pressure sensor 16, 16') associated with a supply line (19, 19' or 21, 21') by comparison of actual values with required values predetermined in a regulating unit (R), a variable capacity pump (18, 18') supplying the consumers via the supply line passed through the one regulating valve, and with a control return line, which, in order to maintain a constant operational pressure drop, connects the regulating unit (18a, 18a') of the variable capacity pump (18, 18') with the supply line after the regulating valve (15, 15') and with a return line for return of the hydraulic medium from the consumer, characterised in that the return line (21, 21' or 19, 19') is passed through the same one regulating valve (15, 15'), in that the regulating valve is connected with each consumer by connector valves (22) associated with each consumer via the consumers (V) and located in the supply line and return line, and in that there is also associated with the return line a transducing means (pressure sensors 16, 17, 17') which, in conjunction with the transducing means (pressure sensor 16, 16') of the supply line, forms a regulating variable for the regulating unit (R).

2. Device according to claim 1, characterised in that the regulating unit (R) detects the actual values in order to ascertain the conditions on both sides of the consumers.

3. Device according to claim 1 or 2, characterised in that the control edge (B-T or A-T) respectively in engagement of the regulating valve (15, 15') throttles the pressure medium ejected from the consumer (V) in the outflow.

4. Device according to one of the preceding claims, characterised in that the central switch position of the regulating valve (15, 15') is preferably in the form of a blocking position.

5. Device according to claim 1, characterised in that the return of the pressure actual value to the regulating unit of variable capacity pump (18, 18') is effected via a shuttle valve (23, 23') or via control taps at the regulating valve.

6. Device according to one of the preceding claims, characterised in that further variable capacity pumps (18') are provided, which are connectable via a connector valve (24) in the connector line (39) between the first and the further variable capacity pumps in both operational directions, and are associated in common with the first variable capacity pump (18) with a plurality of regulating circuits (I, II) with a plurality of central regulating valves (15, 15'), which are regulated by the electronic regulating unit (R).

7. Device according to one of the preceding claims, characterised in that an accumulator (30) may be fed by the variable capacity pump (18, 18') via a 2/2-way valve (26, 27) and the line (40), said accumulator (30) being dischargeable via the line (28, 40).

8. Device according to one of the preceding claims, characterised in that the regulating valve is a 4/4-way valve (29) whose fourth switch position provides a different switching in which pressure medium ejected from the consumer (V) may be fed via a branch duct (32) provided with a non-return valve (31) and bridging the 4/4-way valve, into the pump branch (33).

9. Device according to one of the preceding claims, characterised in that there are provided on the consumers transducing means for detecting the regulating variables position (xₙ) and/or speed (v) or rpm, which process the electronic regulating unit (R) in order to determine the positional variable (y; y1, y2, y₃) of the regulating valve (15, 15') in the closed regulating circuit, the regulating variables being detected in an analog and/or digital manner.

10. Device according to claim 9, characterised in that in the regulating unit (R) the speed guidance variable (w₂) of the position guidance variable (w₁) is superimposed, and the guidance variable (w₃) of the pressure and force regulation acts in a restrictive manner in terms of the actual positional variable (y).

## Revendications

1. Dispositif hydraulique pour utilisateurs hydrauliques (V) dans une machine de moulage par injection pour le traitement de plastique ou matière analogue plastique ou plastifiable avec au moins une valve de régulation (15,15') ayant au moins trois positions de connexion, qui peut être commandée au moyen d'au moins un capteur de valeur mesurée (manomètre 16,16') agencé sur un conduit d'alimentation (19,19' ou 21,21') par comparaison d'une valeur effective avec une valeur de consigne donnée à une unité de réglage (R), dispositif dans lequel une pompe de régulation (18,18') alimente les utilisateurs par un conduit d'alimentation passant par la valve de régulation, et avec un conduit de rétroaction qui relie l'organe de régulation (18a,18a') de la pompe de réglage (18,18') avec le conduit d'alimentation après la valve de régulation (15,15') en vue du maintien d'un gradient de pression de fonctionnement constant, ainsi qu'avec un conduit de retour pour la circulation de retour du fluide hydraulique quittant les utilisateurs
caractérisé en ce que
le conduit de retour (21,21' ou 19,19') est amené également sur la même valve de régulation (15,15')
en ce que la valve de régulation est reliée à chacun des utilisateurs par des clapets de raccordement (22) branchés aux utilisateurs en leurs conduits d'alimentation et de retour,
et en ce que le conduit de retour du fluide comprend également un capteur de valeur mesurée (manomètre 16,17,17') qui, en relation avec le capteur de valeur mesurée (manomètre 16,16') du conduit d'alimentation, forme une grandeur de réglage pour l'unité de réglage (R).

2. Dispositif selon la revendication 1, caractérisé en ce que l'unité de régulation (R) saisit les valeurs effectives pour établir les conditions des deux côtés de l'utilisateur.

3. Dispositif selon la revendication 1 ou 2, caractérisé en ce que la voie de pilotage (B-T ou A-T) de la valve de régulation (15,15') en communication correspondante amortit le fluide hydraulique refoulé par l'utilisateur dans la voie de retour.

4. Dispositif selon l'une des revendications précédentes, caractérisé en ce que la position médiane de connexion de la valve de régulation (15,15') est de préférence agencée en tant que position de fermeture.

5. Dispositif selon la revendication 1, caractérisé en ce que la rétroaction de la valeur effective de pression à l'organe de régulation de la pompe de régulation (18,18') s'effectue au travers d'une soupape alternative (23,23') ou au travers d'une prise de pilotage de la valve de régulation.

6. Dispositif selon l'une des revendications précédentes, caractérisé en ce qu'il est prévu des pompes de régulation supplémentaires (18') qui sont susceptibles d'être connectées dans les deux sens de fonctionnement par un clapet de raccordement (24) agencé dans le conduit de liaison (39) entre la première et les autres pompes de régulation, formant avec la première pompe de régulation (18) plusieurs circuits de régulation (I,II) avec plusieurs valves centrales de régulation (15,15') qui sont pilotées par l'unité de régulation électronique (R).

7. Dispositif selon l'une des revendications précédentes, caractérisé en ce qu'un accumulateur (30) peut être alimenté par la pompe de régulation (18,18') au travers d'un clapet à 2/2 voies (26,27) et d'un conduit (40), et peut être déchargé au travers d'un conduit (28,40).

8. Dispositif selon l'une des revendications précédentes, caractérisé en ce que la valve de régulation est un clapet à 4/4 voies (29) dont la quatrième position de connexion établit une connexion différentielle dans laquelle le fluide hydraulique refoulé par l'utilisateur (V) peut être alimenté dans la ligne de pompage (33) au travers d'un canal secondaire (32) muni d'un clapet anti-retour (31) court-circuitant la valve à 4/4 voies.

9. Dispositif selon l'une des revendications précédentes, caractérisé en ce qu'il est prévu des capteurs de valeurs mesurées sur les utilisateurs pour mesurer des grandeurs de régulation de positions (xn) et/ou de vitesse (v) ou de tours de rotation qui sont traitées par l'unité de régulation (R) en boucle de régulation fermée pour élaborer les grandeurs de réglage (y ; y1,y2,y3) de la valve de régulation (15,15'), capteurs par lesquels les grandeurs de régulation sont mesurées de manière analogique ou numérique.

10. Dispositif selon la revendication 9, caractérisé en ce que, dans l'unité de régulation (R), les grandeurs de pilotage de la vitesse (w2) ou les grandeurs de pilotage de la position (w1) sont mises en premier, et en ce que la grandeur de pilotage de la force ou de la pression (w3) est limitée en regard de la grandeur de position effective (y).
